# EUROPEAN PATENT APPLICATION

(11) **EP 0 936 757 A1**
(43) Date of publication of application: **18.08.1999**
(21) Application number: 97941205.3
(22) Date of filing: 19.09.1997
(51) Int. Cl.: H04B 7/26

(54) **EQUIPMENT AND METHOD FOR RADIO COMMUNICATION**

(71) Applicant: MATSUSHITA ELECTRIC INDUSTRIAL CO., LTD., Kadoma-shi, Osaka-fu, 571 (JP)
(72) Inventor: KATSURA, Eiji, Kawasaki-shi, Kanagawa 211 (JP); WATANABE, Masatoshi, Kawasaki-shi, Kanagawa 215 (JP); KATOU, Osamu, Yokohama-shi, Kanagawa 223 (JP)
(74) Representative: Grünecker, Kinkeldey, Stockmair & Schwanhäusser Anwaltssozietät
(86) International application number: JP9703320
(87) International publication number: WO9916190

(57) **Abstract**

In intermittent reception operation during a waiting time, PCHs are processed by RF receiver 3, A/D converter 4 and correlator 5, and decoded by decoder 6 to obtain decoded data 7. Intermittent reception control circuit 16 judges the presence or absence of call data in the PCHs based on control information near the start of the PCHs (paging channels) and immediately stops the functions of RF receiver 3, A/D converter 4, correlator 5, and decoder 6, in the case that no call data is found, thus reducing power consumption in intermittent reception. This extends the waiting time of a battery-operated digital radio communication system.

## Description

### Technical Field

The present invention relates to digital radio communication systems such as car telephones and portable telephones.

### Background Art

In cellular radio systems such as car telephones and portable telephones, FDMA (Frequency Division Multiple Access) and TDMA (Time Division Multiple Access), etc. are known as the systems in which multiple stations perform communications simultaneously using the same frequency band. CDMA (Code Division Multiple Access) is also known as a system having the advantages of allowing the use of higher frequencies and accommodating more users than these techniques. This CDMA is a system in which information signals are spread in a wide range of radio bands using known spreading codes, and thus it is also called a spread spectrum communication system.

On the other hand, between a mobile station and base station using a cellular radio system, signals are transmitted in both directions through the reverse link and forward link. As this type of transmission system, an FDD (frequency division duplex) system and TDD (time division duplex) system are available. The FDD system uses different frequency bands for the reverse link and forward link, while the TDD system uses the same frequency to transmit signals in time division mode through the reverse link and forward link.

For example, a CDMA/TDD system uses the CDMA system for communications and the TDD system for reverse link/forward link transmissions.

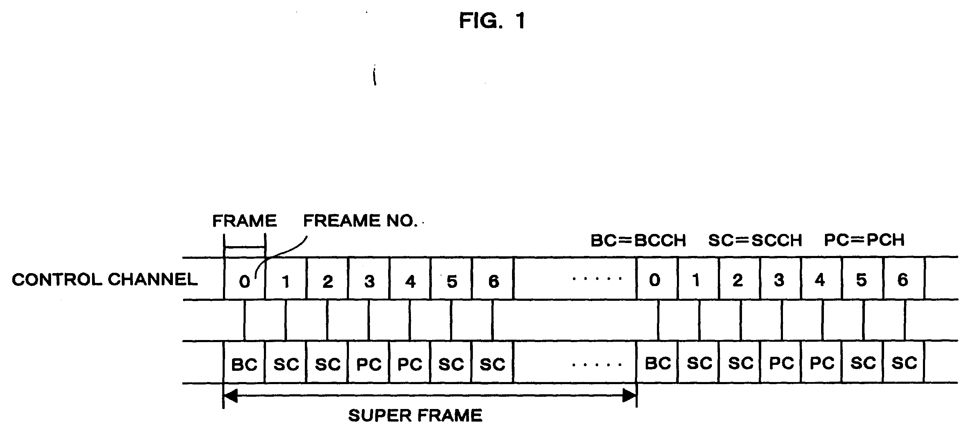

FIG.1 shows an example of the configuration of the control channel in a conventional spread spectrum communication system at a base station. The control channel contains a super frame which has a plurality of frames. Each frame composing the super frame is assigned, for example, broadcast channel (BCCH), common bi-directional control channel (SCCH) and paging channel (PCH).

When a mobile station receives signals intermittently from such a control channel, it only receives PCHs, and for other channels it controls the power supply to the receiving circuit. This allows part of the receive function to be stopped, reducing power consumption. Thus, in even conventional systems, since intermittent receptions are possible to reduce power consumption, the waiting time in battery-powered operation can be extended.

However, in the case of the conventional digital radio communication system above-mentioned, when PCHs are received in intermittent receive operation during the waiting time, it is impossible to stop the receive operation in order to confirm calls. For example, when there are fewer calls such as midnight, the conventional radio communication system would continue the receive operation as long as PCHs are sent even if there is no call information data in the PCHs. This would lead to waste in power consumption, causing a problem of shortening the duration of the system running on batteries.

### Disclosure of Invention

It is an object of the present invention to further reduce power consumption in intermittent receive operation during the waiting time, providing an excellent radio communication system and its method capable of long-hour operation on batteries.

The above object is achieved through the functions of judgeing the presence or absence of any call data near the start of the PCHs sent from the base station and stopping part of the reception function of the system when it is judged that there is no call data.

Judeging the presence or absence of PCH call data in intermittent reception operation during the waiting time and stopping immediately part of the receiving circuit in the absence of call data in the PCHs will allow reduction in power consumption as well as long-hour battery-powered operation.

### Brief Description of Drawings

FIG.1 is a data structural drawing of the control channel of a digital radio communication system;
FIG.2 is a block diagram showing an example of the configuration of a mobile station system of the present CDMA/TDD system digital radio communication system;
FIG.3 is a block diagram to describe the intermittent reception control of the mobile station system shown in FIG.2;
FIG.4 is a flowchart describing the intermittent reception control;
FIG.5A shows a PCH data structural drawing describing the operation of the present radio communication system;
FIG.5B shows PCH reception timing chart in the present radio communication system;
FIG.5C shows conventional PCH receive timing chart; and
FIG.6 is a table of comparison between the present and conventional radio communication systems.

### Best Mode for Carrying Out the Invention

The best mode for carrying out the present invention will now be illustrated in detail with reference to the drawings attached hereto.

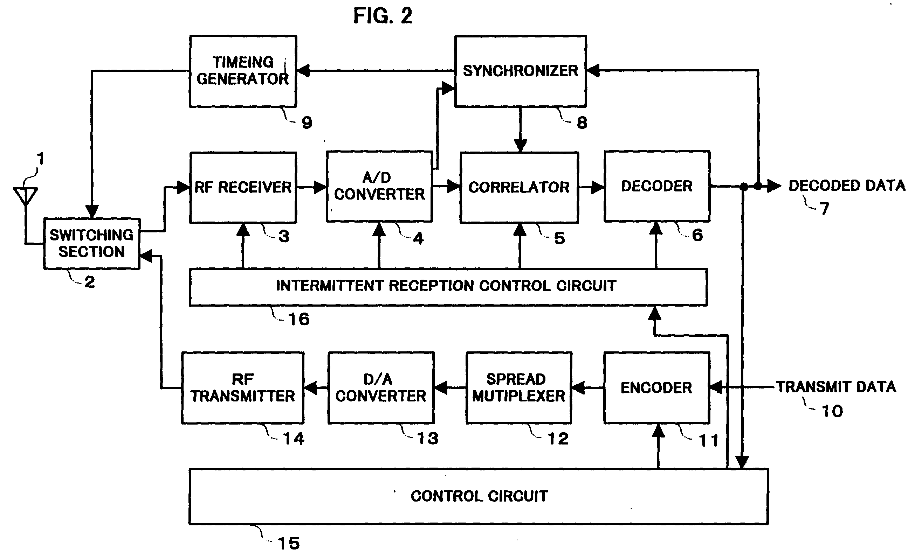

FIG.2 shows the configuration of a mobile station in the present CDMA/TDD system digital radio communication system. In FIG.2, antenna 1 receives radio signals including call data in the PCHs sent from the base station in signal reception. Switching section 2 switches transmission/reception in communications. RF (radio frequency) receiver 3 converts an RF signal received from the base station to a baseband signal and outputs it to A/D (analog/digital) converter 4. A/D converter 4 quantizes the baseband signal and outputs it to correlator 5 and synchronizer 8.

Correlator 5 despreads the A/D converted data, outputs correlation value data to decoder 6 and synchronizes it using a synchronous signal output from synchronizer 8. Decoder 6 decodes the correlation value data which is the output of correlator 5 and outputs decoded data 7. Decoded data 7 is output to control circuit 15 and synchronizer 8. Synchronizer 8 carries out chip synchronization and symbol synchronization from the output of A/D converter 4, outputs the synchronous signal to correlator 5, and furthermore generates a frame synchronous signal from decoded data 7 of decoder 6 and outputs it to timing generator 9. Timing generator 9 controls switching section 2 using the frame synchronous signal of synchronizer 8 to switch transmission/reception in communications.

Encoder 11 encodes transmit data 10. Encoder 11 also constructs a frame configuration of transmit data and control data from the control signal of control circuit 15 and outputs it to spread multiplexer 12. Spread multiplexer 12 spreads spectrum of the encoded data, multiplexes each of the channels to be transmitted, and outputs it to D/A (digital/analog) converter 13. D/A converter 13 converts the spread spectrum multiple digital signals to analog signals and outputs them to RF transmitter 14.

RF transmitter 14 converts the spread spectrum multiple analog signals to an RF signal. This RF signal is output from antenna 1 in the case that switching section 2 is selected for transmission. Control circuit 15 performs control over the entire system. Intermittent reception control circuit 16 stops part of the receiving circuit based on the decoded control data in the PCHs.

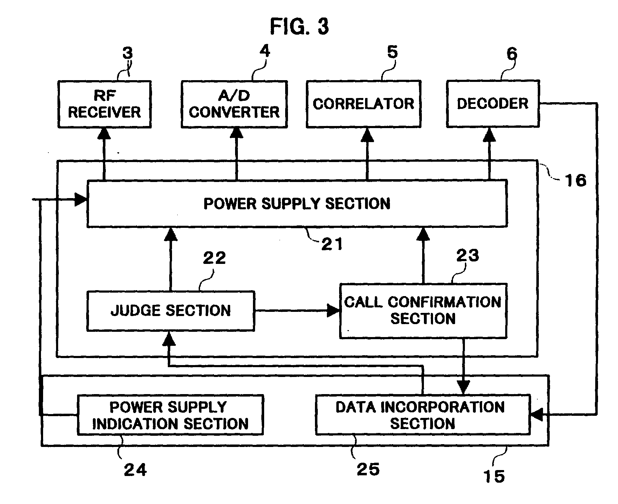

FIG.3 shows a block diagram to describe the operations of control circuit 15 and intermittent reception control circuit 16 in FIG.2. In FIG.3, intermittent reception control circuit 16 includes power supply section 21, Judge section 22 and call confirmation section 23. In addition, control circuit 15 includes power supply indication section 24 and data incorporation section 25.

In intermittent reception control circuit 16, power supply section 21 supplies or stops power to RF receiver 3, A/D converter 4, correlator 5, and decoder 6 in response to an indication from data incorporation section 25.

Judge section 22 judges whether there is any call data in the received PCHs or not. In the case that there is no call data in the PCHs, judge section 22 also sends an indication to stop the power supply to A/D converter 4, correlator 5 and decoder 6 to power supply section 21.

In the case that there is any call data in the PCHs, call confirmation section 23 confirms whether there is any own call. In the case that there is no own call, call confirmation section 23 sends an indication to stop the power supply to RF receiver 3, A/D converter 4, correlator 5 and decoder 6 to power supply section 21.

In control circuit 15, in order to receive PCHs intermittently power supply indication section 24 sends an indication to supply power to RF receiver 3, A/D converter 4, correlator 5 and decoder 6 to power supply section 21.

Data incorporation section 25 incorporates the data decoded by decoder 6. Data incorporation section 25 also sends the received PCHs to decision section 22.

The operation of the present radio communication system with the above configuration will now be described below.

In reception, it receives radio wave sent from the base station at the communication destination or other mobile station systems through antenna 1. In RF receiver 3, an RF signal in the received radio wave is converted to a baseband signal and output to A/D converter 4. Then in A/D converter 4, the baseband signal is quantized and output to correlator 5 and synchronizer 8.

In correlator 5, A/D converted data is despread and its correlation value data is output to decoder 6. Correlator 5 carries out synchronization by the synchronous signal output from synchronizer 8. Decoder 6 decodes the correlation value data which is the output of correlator 5 and outputs decoded data 7. Decoded data 7 is also output to control circuit 15 and synchronizer 8.

Synchronizer 8 carries out chip synchronization and symbol synchronization from the output of A/D converter 4, outputs the synchronous signal to correlator 5, and generates a frame synchronous signal from decoded data 7 and outputs it to timing generator 9. Timing generator 9 controls switching section 2 from the frame synchronous signal to switch transmission/reception.

In transmission, encoder 11 first encodes error correction of transmit data 10. Then, it constructs a frame configuration of, transmit data and control data from control signals of control circuit 15 and output them to spread multiplexer 12. Spread multiplexer 12 spreads spectrum of the encoded data, multiplexes each channel to be transmitted and outputs it to D/A converter 13.

D/A converter 13 converts the spread spectrum multiple digital signals to analog signals and outputs them to RF transmitter 14. RF transmitter 14 converts the spread spectrum multiple digital signals to an RF signal and outputs it from antenna 1 via switching section 2.

Control circuit 15 performs control over the entire system, extracts control data from the decoded data and sends the control data to be sent to encoder 11.

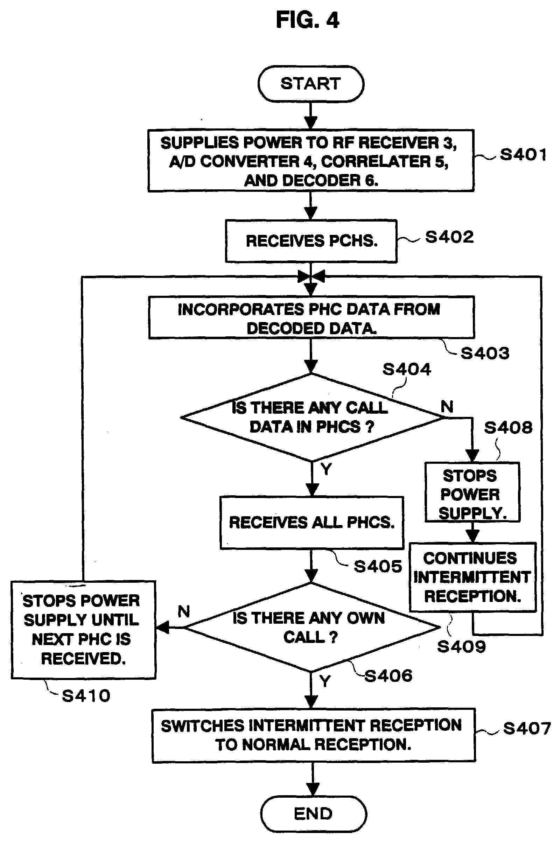

Then, intermittent reception in the mobile station above will be described using the flowchart in FIG.4

Firstly, during the waiting time, in order for the PCH information to be received intermittently, an indication to supply power to RF receiver 3, A/D converter 4, correlator 5, and decoder 6 is sent from power supply indication section 24 of control circuit 15 to power supply section 21 of intermittent reception control section 16. Then, power supply section 21 supplies power to RF receiver 3, A/D converter 4, correlator 5, and decoder 6 according to the indication above (S401).

The radio signals (PCHs) sent from the base station are received by a mobile station through antenna 1 (402), processed by switching section 2, RF receiver 3, A/D converter 4, correlator 5, and decoded by decoder 6. The decoded data is sent from decoder 6 to data incorporation section 25, and data incorporation section 25 incorporates the PCH data from the decoded data (S403).

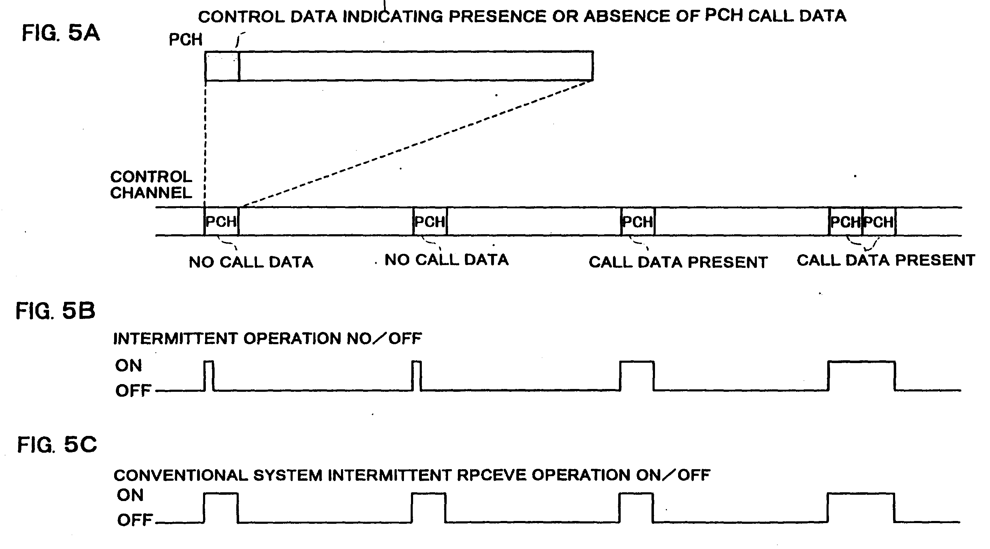

At this time, control circuit 15 sends control signals to intermittent receiver 16 at the timing at which the PCHs are received, and controls intermittent reception by operating RF receiver 3, A/D converter 4, correlator 5 and decoder 6 as shown in FIG.5. When intermittent receiver 16 receives the PCHs, control circuit 15 extracts the call data allocated at the start (hatching in FIG.5A) and sends it to intermittent receive control circuit 16.

Then, judge section 22 of intermittent receive control circuit 16 judges whether there is any call data in the PCHs (S404). In the case that any call data is found in the PCHs, it receives all the PCHs (S405), sends the data to call confirmation section 23 to confirm whether there is any own call (S406). In the case that there is some own call, the information is sent from call confirmation section 23 to power supply section 21 and power supply section 21 continues power supply in order to continue reception. Then, control circuit 15 switches intermittent reception to normal reception (S407).

On the other hand, in the case that there is no call data in the PCHs, the information is sent from judge section 21 to power supply section 21 and power supply section 21 stops the power supply to FR receiver 3, A/D converter 4, correlator 5, and decoder 6 (S408). This allows intermittent reception to be continued (S409). Therefore, as shown in FIG.5B, in the case that there is no data in the PCHs, the power supply time is short, while in the case that there is any call data in the PCHs, the power supply time is long. Accordingly, such control can shorten the power supply time in intermittent reception considerably. This is clearly seen from FIG.5B and FIG.5C.

After all the PCHs are received, in the case that there is no own call, the information is sent from call confirmation section 23 to power supply section 21, and power supply section 21 stops the power supply to RF receiver 3, A/D converter 4, correlator 5, and decoder (S410). This allows intermittent reception to be continued.

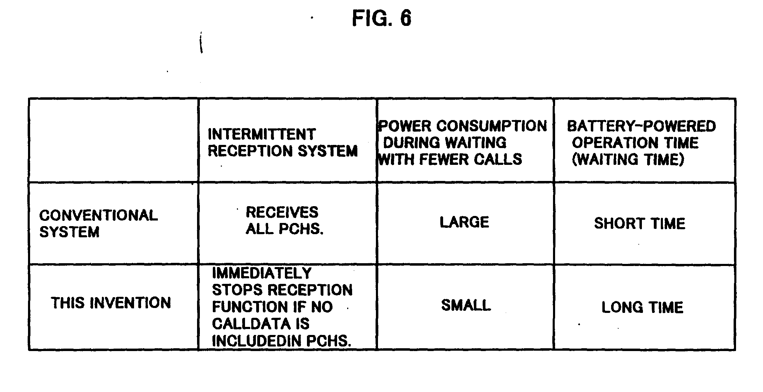

FIG.6 is a table that shows a comparison between the characteristics of the present and conventional digital radio communication systems. As is clearly seen from this table, the present digital radio communication system is capable of drastically reducing power consumption and demonstrating excellent effects in battery-powered portable applications, etc., extending the time during which the system is available.

In this way, according to the operating mode described above, for a CDMA/TDD system digital radio communication system, the present invention provides intermittent reception control circuit 16 which receives and decodes control data which indicates the presence or absence of any call data in the PCHs located at the start of the PCHs in intermittent operation, and immediately stops the function of the receiver if there is no call data in the PCHs, and therefore it reduces power consumption during a waiting time and at the same time insures long-hour operation on batteries.

In the above operating mode, only CDMA/TDD system digital radio communication is described. However, the present invention can also be applied to a CDMA/FDD system or TDMA system as well.

As has been explained above, the present invention incorporates into some of PCHs sent from the base station, control data which indicates the presence or absence of call data in those PCH frames. The mobile station receives the radio signal which contains this control data, and judges the presence or absence of any call data in the PCH frames based on the control data. If no call data is found, part of the receive function of the system is immediately stopped, and thus it is possible to reduce power consumption during a waiting time in intermittent reception operation allowing long-hour operation on batteries.

### Industrial Applicability

The present invention is preferably applicable to battery-operated apparatuses such as car telephones and portable telephones.

## Claims

1. A system for radio communications, comprising: judging means for judging whether any call data is included in a control channel;
intermittent reception control means for stopping a reception function in the case that no call data is included in said control channel.

2. The system for radio communications of claim 1, further comprising said judging means judging whether any call data is included in control data at the start of the control channel.

3. The system for radio communications of claim 1, wherein call confirming means for confirming the presence of own call data in said control channel in the case that some call data is included in said control channel.

4. The system for radio communications of claim 3, wherein said intermittent reception control means switches from intermittent reception to normal reception in the case that some own call data is included in said control channel.

5. The system for radio communications of claim 3, wherein said intermittent reception control means stops the reception function until the next control channel is received in the case that no own call data is included in said control channel.

6. The system for radio communications of claim 1, wherein said control channel is a paging channel.

7. The system for radio communications of claim 1, wherein the radio transmission system used is a spread spectrum communication system in which signals are transmitted in time division mode using the same frequency for the reverse link and forward link.

8. The system for radio communications of claim 1, wherein the radio transmission system used is a spread spectrum communication system in which signals are transmitted using different frequencies for the reverse link and forward link.

9. The system for radio communications of claim 1, wherein a time division multiple access is used as the radio transmission system.

10. A system for radio communications, comprising:
a mobile station system including
judging means for judging whether any call data is included in the control channel;
intermittent reception control means for stopping the reception function in the case that no call data is included in said control channel, and
a base station system which performs data transfers from/to said mobile station system.

11. The system for radio communications of claim 10, further comprising call confirmation means for confirming whether any own call data is included in said control channel in the case that some call data is included in said control channel.

12. The system for radio communications of claim 11, wherein said intermittent reception control means switches from intermittent reception to normal reception in the case that some own call data is included in said control channel.

13. The system for radio communications of claim 11, wherein said intermittent reception control means stops the reception function until the next control channel is received, in the case that no own call data is included in said control channel.

14. A method for radio communications comprising the steps of:
judging whether any call data is included in the control channel;
stopping the receive function in the case that no call data is included in said control channel.

15. The system for radio communications of claim 14, wherein call confirmation means confirms whether any own call data is included in said control channel, in the case that some call data is included in said control channel.

16. The system for radio communications of claim 14, wherein said intermittent reception control means switches from intermittent reception to normal reception, in the case that some own call data is included in said control channel.

17. The system for radio communications of claim 14, wherein said intermittent reception control means stops the reception function until the next control channel is received, in the case that no own call data is included in said control channel.
